Europäisches Patentamt

European Patent Office

Office européen des brevets

(19)

(11)  EP 0 960 520 B1

(12)  **FASCICULE DE BREVET EUROPEEN**

(45) Date de publication et mention
de la délivrance du brevet:
**25.08.2004  Bulletin 2004/35**

(21) Numéro de dépôt: **98910785.9**

(22) Date de dépôt: **16.02.1998**

(51) Int Cl.⁷: **H04M 3/40**, H04M 1/76

(86) Numéro de dépôt international:
**PCT/FR1998/000295**

(87) Numéro de publication internationale:
**WO 1998/036549 (20.08.1998 Gazette 1998/33)**

(54) **PROCEDE D'ADAPTATION AUTOMATIQUE DES NIVEAUX DES SIGNAUX ECHANGES DANS UN RESEAU DE COMMUNICATION**

VERFAHREN ZUR AUTOMATISCHEN ANPASSUNG DER LEISTUNG VON SIGNALEN IN EINEM KOMMUNIKATIONSNETZ

METHOD FOR AUTOMATICALLY ADAPTING LEVELS OF SIGNALS EXCHANGED IN A COMMUNICATION NETWORK

(84) Etats contractants désignés:
**DE FR GB IT**

(30) Priorité:  **17.02.1997  FR 9701827**

(43) Date de publication de la demande:
**01.12.1999  Bulletin 1999/48**

(73) Titulaire: **THOMSON multimedia**
**92648 Boulogne Cédex (FR)**

(72) Inventeur: **LORIN, Christophe**
**F-92648 Boulogne (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**GB-A- 2 289 188          US-A- 3 781 481**
**US-A- 4 277 655          US-A- 5 422 950**

• **PATENT ABSTRACTS OF JAPAN vol. 012, no. 452 (E-687), 28 novembre 1988 & JP 63 178692 A (MATSUSHITA ELECTRIC IND CO LTD), 22 juillet 1988,**

**Description**

La présente invention concerne un procédé d'adaptation automatique des niveaux des signaux échangés entre des appareils tels que des téléphones, des vidéophones (système de transmission de la voix et de la vidéo par le réseau téléphonique), des fax ou des ordinateurs reliés à un réseau de communication. L'invention concerne aussi un dispositif d'adaptation automatique.

L'invention concerne particulièrement un procédé d'adaptation automatique des niveaux des signaux échangés dans un réseau téléphonique.

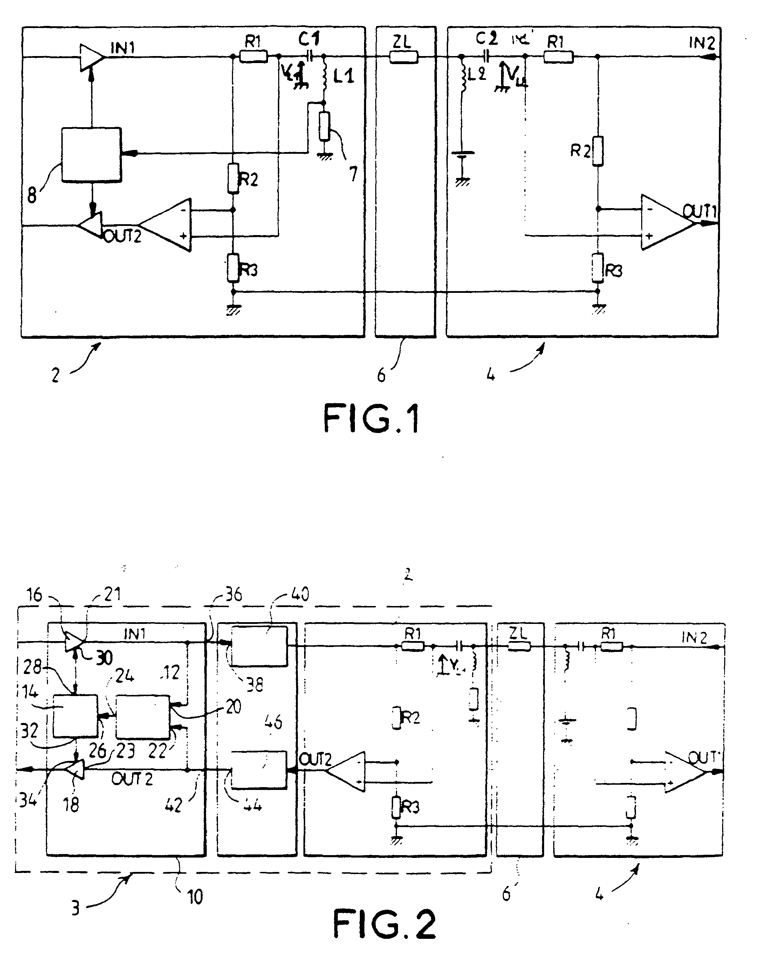

La figure 1 représente schématiquement une boucle d'abonné 2 dans une architecture connue d'un réseau téléphonique, reliant un utilisateur à un centrai téléphonique 4. L'utilisateur émet un signal IN1 et reçoit un signal OUT2 à travers une ligne de. transmission 6 représentée par son impédance $Z_L$. Cette impédance a une influence néfaste sur les signaux échangés entre l'utilisateur et la centrale.

Une solution pour corriger les distorsions apportées par la ligne de transmission analogique consiste à mesurer, aux bornes d'une charge 7 reliée à la ligne à travers une inductance L1, une tension continue $V_{dc}$, étant entendu que les capacités C1, C2 jouent le rôle de filtres pour les signaux de fréquence basse alors que les inductances L1, L2 filtrent les signaux de fréquence haute. Cette tension $V_{dc}$ est ensuite délivrée à un module de calcul 8, qui détermine, à partir du résultat de cette mesure une valeur pour $Z_L$. Le module de calcul détermine également un gain G1, choisi de façon à ce que le gain de IN1 au point VL2 ne dépende pas de $Z_L$, un gain G2, choisi de façon à ce que le gain de IN2 dans le signal OUT2 ne dépende pas non plus de $Z_L$, et un gain G3 choisi de façon à supprimer le signal transmis IN2 du signal reçu OUT2 et faisant office d'annuleur d'échos (G3 ne figure pas sur la figure 1).

On peut déterminer que:

$$OUT2 = \frac{IN1}{2} * \left[ \frac{Z_L}{Z_L + 2R_1} \right] + IN2 * \left[ \frac{R_1}{Z_L + 2R_1} \right]$$

Dans ce cas, en prenant:

$$G1 = G2 = \frac{Z_L}{2R_1} + 1$$

et

$$G3 = 2 * \frac{Z_L + R_1}{Z_L + 2R_1}$$

on obtient: OUT1=0.5*IN1 et OUT2=0.5*IN2

Cette solution n'est pas adaptée à la compensation des signaux échangés par des appareils numériques qui nécessitent d'être isolés de la boucle d'abonné et qui n'ont donc pas accès à l'impédance de ligne $Z_L$ par une mesure tension/courant directe.

Le document US5422950 (Miller et al) est relatif à la compensation automatique des atténuations dans un système téléphonique. L'estimation de l'impédance de la ligne est effectuée par la mesure de la tension sur les lignes 28, 30 pour un courant particulier au moyen d'un simple circuit de mesure de résistance 42. L'objet du document US5422950 ne résoud pas le problème précédemment cité.

Le but de l'invention est de réduire l'influence de l'impédance ligne, et ceci malgré l'impossibilité de la mesure directe décrite ci-dessus.

Ce but est atteint par un procédé d'adaptation automatique des niveaux des signaux échangés entre un premier appareil et un second appareil communiquant par une ligne de transmission avec ledit premier appareil, caractérisé en ce qu'il comprend les étapes suivantes :

- on réalise une numérisation du signal provenant de la ligne de transmission et reçu par le premier appareil (2),
- à partir des données numériques traduisant les signaux échangés avec la ligne de transmission, on réalise une estimation de la fonction de transfert égale au rapport du signal reçu par le premier appareil sur le signal émis (IN1) par le premier appareil,
- on multiplie respectivement chacun des signaux échangés (IN1, OUT2) par un gain approprié (G1, G2) déterminé à partir de la valeur estimée de ladite fonction de transfert (K).

Avec le procédé selon l'invention, il n'est plus nécessaire de mesurer une tension continue pour déterminer les gains nécessaires à la compensation dans la mesure où la solution mise en oeuvre est essentiellement numérique, à savoir logicielle et peut, de ce fait, être mise en oeuvre pour compenser le niveau des signaux échangés dans des applications utilisant des appareils numériques, isolés de la boucle d'abonné, tels que des vidéophones, des fax ou des ordinateurs. Le procédé permet, de façon dynamique, un fonctionnement en mode duplex intégral indépendant des variations de température, dès lors qu'au moins une émission de signal sortant de l'appareil a été effectuée pour connaître les caractéristiques initiales de la ligne.

On peut avoir avantage à ce que l'estimation numérique permettant d'évaluer la fonction de transfert (K) soit effectuée au moyen d'une méthode de calcul logicielle.

Selon un mode de réalisation, cette méthode de calcul implémente un algorithme d'identification.

Préférentiellement, l'algorithme d'identification est du type LMS ("Least Mean Square" en langue anglaise), RLS ("Recursive Least Square" en langue anglaise) ou Kalman.

L'invention concerne également un dispositif d'adaptation automatique des niveaux de signaux échangés entre un premier appareil (3) et un second appareil communiquant par une ligne de transmission, caractérisé en ce qu'il comporte :

un convertisseur analogique/numérique apte à numériser un signal entrant dans le premier appareil,
un convertisseur numérique/analogique apte à convertir un signal émis par le premier appareil,
un bloc de calcul destiné à estimer le rapport du signal entrant sur le signal émis par le premier appareil, et à déterminer des gains nécessaires à l'adaptation des niveaux des signaux émis et reçus par le premier appareil, lesdits gains étant fonction dudit rapport.

Selon un mode de réalisation, le bloc numérique de calcul comporte une unité d'identification de la fonction de transfert coopérant avec un module de calcul destiné à fournir, à un premier moyen d'amplification, le premier gain pour adapter le niveau du signal émis par un utilisateur, et à fournir, à un deuxième moyen d'amplification, le deuxième gain pour adapter le niveau du signal reçu par l'utilisateur.

Avantageusement, le bloc de calcul est un circuit DSP ("Digital Signal Processing" en langue anglaise) mettant en oeuvre un algorithme d'identification.

D'autres caractéristiques et avantages de l'invention ressortiront de la description qui va suivre, prise à titre d'exemple non limitatif, en référence aux figures annexées dans lesquelles :

- la figure 1, déjà décrite, représente schématiquement une boucle d'abonné dans un réseau téléphonique selon une architecture de l'art antérieur,
- la figure 2 représente schématiquement une boucle d'abonné dans un réseau téléphonique comportant un dispositif d'adaptations automatique des niveaux des signaux. échangés selon l'invention,
- la figure 3 représente schématiquement une boucle d'abonné similaire à la figure 2, implémentant un annuleur d'écho.

La figure 2 illustre schématiquement une liaison entre un appareil 3 d'un utilisateur et un central téléphonique 4 via une ligne 6 de transmission représentée par son impédance $Z_L$. L'utilisateur émet un signal IN1 et reçoit un signal OUT2, tandis que la centrale 4 émet un signal IN2 et reçoit un signal OUT1.

Pour éviter l'atténuation due à l'impédance $Z_L$ de la ligne 6 que subissent les signaux IN1 et OUT2 et afin de maintenir indépendantes de l'impédance ligne les fonction de transfert du signal IN1 au niveau du point VL2 et du signal OUT2, le procédé selon l'invention comporte une étape de numérisation du signal entrant ledit appareil, une étape d'estimation de la fonction de transfert K en fonction des signaux échangés OUT2 et IN1, puis une étape de multiplication de chaque signal par un gain approprié déterminé à partir de la valeur de la fonction de transfert K déterminée au préalable.

Lors de l'émission du signal IN1, le signal OUT2 détecté à la sortie de la boucle d'abonné attaque un convertisseur analogique/numérique 44 numérisant ledit signal OUT2.

L'estimation de la fonction de transfert K est réalisée numériquement par un algorithme d'identification basé, par exemple, sur la méthode des moindres carrés, l'algorithme RLS (Recursive Least Square en langue anglaise) ou encore sur l'algorithme de Kalman. L'algorithme a pour fonction de calculer les paramètres caractéristiques de la fonction de transfert K qui peut être notamment une matrice $(h_l)_{1 \leq i \leq n}$ ou une fraction polynomiale en $(Z_L^{-i})_{1 \leq i \leq n}$.

Dans le présent mode de réalisation, le calcul consiste à déterminer dans un premier temps le rapport:

$$\frac{OUT2}{IN1} = K(Z_L) + \varepsilon$$

où

$$K(Z_L) = \frac{Z_L}{2 \cdot (Z_L + 2 \cdot R_1)}$$

Ceci étant vrai dans le présent mode de réalisation avec une impédance $Z_L$ supposée fixe. Il est entendu que l'impédance de source est égale à l'impédance d'entrée de la ligne pour une ligne courte $Z_L=0$ et l'impédance d'entrée de la ligne est une fonction de l'impédance caractéristique $Z_C$ et de l'impédance de charge $Z_R$; dans le présent cas $Z_R$ est égale à l'impédance de source R1. Par souci de simplification, il a été posé $Z_L=Z_C$.

Une étape postérieure à ce calcul consiste à déterminer:

- pour le signal émis, un premier gain

$$G1(Z_L) = \frac{Z_L}{2R_1} + 1 = \frac{1}{1 - 2 \cdot K(Z_L)}$$

- et pour le signal reçu, un deuxième gain

$$G2(Z_L) = \frac{1}{1 - 2 \cdot K(Z_L)}.$$

Il apparaît que pour ces valeurs de gains, la tension OUT2 aux extrémités de la ligne de transmission est égale à la moitié de la tension VL2 (échos de IN1 mis à part).

Le dispositif de la figure 2 comporte un bloc numérique de calcul 10 destiné à estimer l'impédance $Z_l$ de la ligne de transmission et à déterminer les gains nécessaires à la compensation des signaux échangés. Ce bloc numérique de calcul 10 comporte une unité d'identification 12 de la fonction de transfert K coopérant avec un module de calcul 14 destiné à fournir, à un premier moyen d'amplification 16, le premier gain G1 pour compenser l'atténuation des signaux émis par l'utilisateur, et à fournir, au deuxième moyen d'amplification 18, un deuxième gain G2 pour compenser l'atténuation des signaux reçus par l'utilisateur.

Préférentiellement, le bloc numérique de calcul 10 est un circuit DSP (Digital signal processing en langue anglaise) mettant en oeuvre un des algorithmes d'identification cités plus haut. Un autre type de circuit peut bien entendu aussi être utilisé.

Comme on peut le voir sur la figure 2, une première entrée 20 de l'unité d'identification 12 est reliée à la sortie 21 du premier moyen d'amplification 16, tandis qu'une deuxième entrée 22 de ladite unité d'identification 12 est reliée à une première entrée 23 du deuxième moyen d'amplification 18. La sortie 24 de l'unité d'identification 12 est reliée à l'entrée 26 du module de calcul 14. Une première sortie 28 du module de calcul 14 est reliée à une première entrée 30 du premier moyen d'amplification 16 tandis qu'une deuxième sortie 32 du module de calcul 14 est reliée à une deuxième entrée 34 du deuxième moyen d'amplification 16. La sortie 36 du bloc numérique de calcul 10 est reliée à une entrée 38 d'un convertisseur numérique-analogique 40 tandis que l'entrée 42 dudit bloc numérique de calcul 10 est reliée à la sortie 44 d'un convertisseur analogique-numérique 46.

En fonctionnement, l'unité d'identification 12 fournit au module de calcul 14 une valeur estimée de la fonction de transfert K calculée à partir des valeurs des signaux émis et des signaux reçus par l'utilisateur. Ces signaux sont appliqués respectivement à la première entrée 20 et à la deuxième entrée 22 de l'unité d'identification 12.

Le module de calcul 14 fournit, au premier moyen d'amplification 16, le premier gain G1 pour compenser l'atténuation des signaux émis par l'utilisateur, et au deuxième moyen d'amplification 18, le deuxième gain G2 pour compenser l'atténuation des signaux reçus par l'utilisateur.

La méthode et le dispositif de l'invention permettent ainsi de réaliser une adaptation automatique des niveaux des signaux échangés à travers une ligne de transmission. De plus ce système n'est pas sensible aux dérives en température qui peuvent affecter la mesure de tension préconisée dans l'art antérieur, telle que celle aux bornes de la charge 7 de la figure 1. Aussi, la méthode est indépendante des variations de la source d'énergie X du réseau téléphonique.

La connaissance de la fonction de transfert $K(Z_L)$ peut aussi être utilisée pour détecter la présence d'une connexion en parallèle du dispositif de l'invention dans la ligne de transmission. Ladite méthode de détection comporte une étape d'observation du signe du gain de la fonction de transfert K identifiée. Lorsque le signe est négatif, alors il en est déduit qu'un second poste est connecté en parallèle sur la ligne de transmission. Cette information peut être utilisée, par exemple, à titre non limitatif, pour des questions de sécurité dans le cas d'utilisation d'un modem et d'un téléphone. Si la détection est réalisée par le modem, alors celui-ci peut raccrocher pour libérer la ligne.

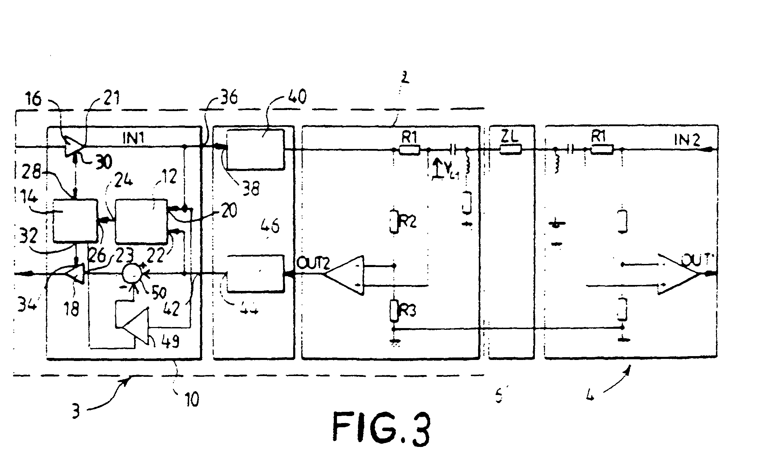

La figure 3 est similaire à la figure 2, les mêmes éléments comportant les mêmes références. Cependant, on introduit en plus dans le dispositif des moyens d'annulation d'écho. En pratique, cela revient à rendre OUT2 indépendant de IN1. Pour cela, on introduit un troisième gain, G3, appliqué à IN1 par l'intermédiaire d'un amplificateur 49. L'ensemble est soustrait à OUT2 par un soustracteur 50, avant l'amplification par G2. On peut montrer que pour annuler l'écho, il faut que $G3=K(Z_L)$.

### Revendications

1. Procédé d'adaptation automatique des niveaux des signaux (IN1, OUT2) échangés entre un premier appareil (3) et un second appareil (4) communiquant par une ligne de transmission (6) avec ledit premier appareil (2), **caractérisé en ce qu'**il comprend les étapes suivantes :

   - on réalise une numérisation du signal (OUT2) provenant de la ligne de transmission (6) et reçu par le premier appareil (2),
   - à partir des données numériques traduisant les signaux échangés (IN1, OUT2) avec la ligne de transmission (6), on réalise une estimation de la fonction de transfert (K) égale au rapport du signal reçu (OUT2) par le premier appareil sur le signal émis (IN1) par le premier appareil,
   - on multiplie respectivement chacun des signaux échangés (IN1, OUT2) par un gain approprié (G1, G2) déterminé à partir de la valeur estimée de ladite fonction de transfert (K).

2. Procédé selon la revendication 1, **caractérisé en ce qu'**il comprend les étapes suivantes :

   - on réalise l'estimation de la fonction de transfert (K) définie par :

   $$\frac{OUT2}{IN1} = K(Z_L) + \varepsilon$$

   où

   $$K(Z_L) = \frac{Z_L}{2 \cdot (Z_L + 2 \cdot R_1)}$$

   et $Z_L$ représentant l'impédance de la ligne de transmission (6), tandis que R1 représente l'impédance de source de la ligne de transmission (6),
   - on calcule :

   pour le signal émis, le premier gain G1

   $$G1(Z_L) = \frac{1}{1 - 2 \cdot K(Z_L)}$$

   et pour le signal reçu, le deuxième gain G2

   $$G2(Z_L) = \frac{1}{1 - 2 \cdot K(Z_L)}$$

3. Procédé selon la revendication 1 ou 2, **caractérisé en ce que** le gain (G2) du signal reçu (OUT2) par le premier appareil est choisi de manière à ce que la composante du signal émis par le second appareil (IN2) dans le signal reçu (OUT2) par le premier appareil soit indépendante de l'impédance (ZL) de la ligne de transmission.

**4.** Procédé selon l'une des revendications 1 à 3, **caractérisé en ce que** le gain (G1) du signal émis (IN1) par le premier appareil est choisi de manière à ce que la composante de ce signal (IN1) dans le signal reçu (OUT2) par le second appareil soit indépendante de l'impédance (ZL) de la ligne de transmission.

**5.** Procédé selon la revendication 3, **caractérisé en ce que** le calcul des gains (G1,G2) implémente un algorithme d'identification.

**6.** Dispositif d'adaptation automatique des niveaux de signaux (IN1, OUT2) échangés entre un premier appareil (3) et un second appareil (4) communiquant par une ligne de transmission (6), **caractérisé en ce qu'**il comporte:

   un convertisseur analogique/numérique (46) apte à numériser un signal entrant (OUT2) dans le premier appareil (3),
   un convertisseur numérique/analogique (40) apte à convertir un signal émis par le premier appareil,
   un bloc de calcul (10) destiné à estimer le rapport du signal entrant (OUT2) sur le signal émis (IN1) par le premier appareil, et à déterminer des gains (G1, G2) nécessaires à l'adaptation des niveaux des signaux émis et reçus par le premier appareil (IN1, OUT2), lesdits gains étant fonction dudit rapport.

**7.** Dispositif selon la revendication 6, **caractérisé en ce que** le bloc (10) comporte une unité d'identification (12) de la fonction de transfert (K) coopérant avec un module de calcul (14) destiné à fournir, à un premier moyen d'amplification (16), le premier gain (G1) pour adapter le niveau du signal (IN1) émis par le premier appareil, et à fournir, à un deuxième moyen d'amplification (18), le deuxième gain (G2) pour adapter le niveau du signal (OUT2) reçu par le premier appareil.

**8.** Dispositif selon l'une des revendications 5 à 7, **caractérisé en ce que** le bloc de calcul (10) comporte un circuit DSP mettant en oeuvre un algorithme d'identification.

**9.** Dispositif selon la revendication 8, **caractérisé en ce que** l'algorithme d'identification est du type LMS, RLS ou Kalman.

**10.** Appareil de communication (3) **caractérisé en ce qu'**il comporte un dispositif selon l'une des revendications 6 à 9.

**Patentansprüche**

**1.** Verfahren zur automatischen Anpassung der Werte von Signalen (IN1, OUT2), die zwischen einem ersten Gerät (3) und einem zweiten Gerät (4) ausgetauscht werden, das mit dem ersten Gerät (2) über eine Übertragungsleitung (6) kommuniziert,
   **gekennzeichnet durch** folgende Schritte:

   - das Signal (OUT2), das von der Übertragungsleitung (6) kommt und **durch** das erste Gerät (2) empfangen wird, wird digitalisiert,
   - aus den digitalen Daten, die die Signale (IN1, OUT2) darstellen, die mit der Übertragungsleitung (6) ausgetauscht werden, erfolgt eine Schätzung der Übertragungsfunktion (K) gleich dem Verhältnis des **durch** das erste Gerät empfangenen Signals (OUT 2) zu dem **durch** das erste Gerät gesendeten Signal (IN1),
   - jedes der ausgetauschten Signale (IN1, OUT2) wird jeweils mit einem geeigneten Verstärkung (G1, G2) multipliziert, die aus dem geschätzten Wert der Übertragungsfunktion (K) ermittelt wird.

**2.** Verfahren nach Anspruch 1, **gekennzeichnet durch** folgende Schritte:

   - es erfolgt eine Schätzung der Übertragungsfunktion (K), die definiert ist **durch**:

$$\frac{OUT2}{IN1} = K(Z_L) + \varepsilon$$

   wobei

$$K(Z_L) = \frac{Z_L}{2 * (Z_L + 2R_1}$$

und wobei $Z_L$ die Impedanz der Übertragungsleitung (6) darstellt, während R1 die Quellenimpedanz der Übertragungsleitung (6) darstellt,

- man berechnet:

für das gesendete Signal die erste Verstärkung G1

$$G1(Z_L) = \frac{1}{1 - 2\ K(Z_L)}$$

und für das empfangene Signal die zweite Verstärkung G2

$$G2(Z_L) = \frac{1}{1 - 2K(Z_L)}$$

3. Verfahren nach einem der Ansprüche 1 oder 2, **dadurch gekennzeichnet, dass** die Verstärkung (G2) des durch das erste Gerät empfangenen Signals (OUT2) derart gewählt wird, dass die Komponente des durch das zweite Gerät (IN2) gesendeten Signals in dem durch das erste Gerät empfangenen Signal (OUT2) unabhängig ist von der Impedanz (ZL) der Übertragungsleitung.

4. Verfahren nach einem der Ansprüche 1 bis 3, **dadurch gekennzeichnet, dass** die Verstärkung (G1) des durch das erste Gerät gesendeten Signals (IN1) derart gewählt ist, dass die Komponente dieses Signals (IN1) in dem durch das zweite Gerät empfangenen Signal (OUT2) unabhängig ist von der Impedanz (ZL) der Übertragungsleitung.

5. Verfahren nach Anspruch 3, **dadurch gekennzeichnet, dass** die Berechnung der Verstärkungen (G1, G2) durch einen Identifizierungsalgorithmus erfolgt.

6. Gerät zur automatischen Anpassung der Werte von Signalen (IN1, OUT2), die zwischen einem ersten Gerät (3) und einem zweiten Gerät (4) ausgetauscht werden, die über eine Übertragungsleitung (6) kommunizieren, **gekennzeichnet durch:**

einen Analog/Digital-Konverter (46) zur Digitalisierung eines in das erste Gerät hineinfließenden Signals (OUT2),
einen Digital/Analog-Konverter (40) zur Umsetzung eines **durch** das erste Gerät gesendeten Signals,
einen Berechnungsblock (10) zur Schätzung des Verhältnisses des ankommenden Signals (OUT2) zu dem **durch** das erste Gerät gesendeten Signal (IN1) und zur Ermittlung der Verstärkungen (G1, G2), die benötigt werden für die Anpassung der Werte der **durch** das erste Gerät gesendeten und empfangenen Signale (IN1, OUT2), wobei diese Verstärkungen von diesem Verhältnis abhängig sind.

7. Gerät nach Anspruch 6, **dadurch gekennzeichnet, dass** der Block (10) eine Einheit (12) zur Identifizierung der Übertragungsfunktion (K) aufweist, die mit einem Berechnungsmodul (14) zusammen arbeitet, das zur Lieferung erster Verstärkungsmittel (16) mit der ersten Verstärkung (G1) zur Anpassung des Wertes des Signals (IN1), das durch das erste Gerät gesendet wird, und zur Lieferung zweiter Verstärkungsmittel (18) mit der zweiten Verstärkung (G2) zur Anpassung des Werts des durch das erste Gerät empfangenen Signals (OUT2).

8. Gerät nach einem der Ansprüche 5 bis 7, **dadurch gekennzeichnet, dass** der Berechnungsblock (10) eine DSP-Schaltung enthält, die einen Identifizierungsalgorithmus durchführt.

9. Gerät nach Anspruch 8, **dadurch gekennzeichnet, dass** der Identifizierungsalgorithmus vom Typ LMS, RLS oder Kalman ist.

10. Kommunikationsvorrichtung (3), **dadurch gekennzeichnet, dass** sie ein Gerät nach einem der Ansprüche 6 bis 9 enthält.

**Claims**

1. Method for automatically matching the levels of the signals (IN1, OUT2) exchanged between a first apparatus (3) and a second apparatus (4) which communicates with the said first apparatus (2) via a transmission line (6), **characterized in that** it comprises the following steps:

   - the signal (OUT2) which comes from the transmission line (6) and is received by the first apparatus (2) is digitized,
   - on the basis of the digital data representing the signals (IN1, OUT2) exchanged with the transmission line (6), an estimate is made of the transfer function (K) equal to the ratio of the signal (OUT2) received by the first apparatus to the signal (IN1) transmitted by the first apparatus,
   - each of the exchanged signals (IN1, OUT2) is respectively multiplied by a suitable gain (G1, G2) determined on the basis of the estimated value of the said transfer function (K).

2. Method according to Claim 1, **characterized in that** it comprises the following steps:

   - the estimate of the transfer function (K) defined in the following way is made:

   $$\frac{OUT2}{IN1} = K(Z_L) + \varepsilon$$

   where

   $$K(Z_L) = \frac{Z_L}{2 \cdot (Z_L + 2 \cdot R_1)}$$

   and $Z_L$ represents the impedance of the transmission line (6), while R1 represents the source impedance of the transmission line (6),
   - the following are calculated:

   for the transmitted signal, the first gain G1

   $$G1(Z_L) = \frac{1}{1 - 2 \cdot K(Z_L)}$$

   and for the received signal, the second gain G2

   $$G2(Z_L) = \frac{1}{1 - 2 \cdot K(Z_L)} \ .$$

3. Method according to Claim 1 or 2, **characterized in that** the gain (G2) of the signal (OUT2) received by the first apparatus is chosen so that the component of the signal transmitted by the second apparatus (IN2) in the signal (OUT2) received by the first apparatus is independent of the impedance (ZL) of the transmission line.

4. Method according to one of Claims 1 to 3, **characterized in that** the gain (G1) of the signal (IN1) transmitted by the first apparatus is chosen so that the component of this signal (IN1) in the signal (OUT2) received by the second apparatus is independent of the impedance (ZL) of the transmission line.

5. Method according to Claim 3, **characterized in that** the calculation of the gains (G1, G2) implements an identification algorithm.

6. Device for automatically matching the levels of signals (IN1, OUT2) exchanged between a first apparatus (3) and a second apparatus (4) communicating via a transmission line (6), **characterized in that** it has:

- an analogue/digital converter (46) capable of digitizing a signal (OUT2) entering the first apparatus (3),
- a digital/analogue converter (40) capable of converting a signal transmitted by the first apparatus,
- a calculation block (10) intended to estimate the ratio of the incoming signal (OUT2) to the signal (IN1) transmitted by the first apparatus, and to determine the gains (G1, G2) needed for matching the levels of the signals transmitted and received by the first apparatus (IN1, OUT2), the said gains being dependent on the said ratio.

7. Device according to Claim 6, **characterized in that** the block (10) has a unit (12) for identifying the transfer function (K) interacting with a calculation module (14) which is intended to supply a first amplification means (16) with the first gain (G1) for matching the level of the signal (IN1) transmitted by the first apparatus, and to supply a second amplification means (18) with the second gain (G2) for matching the level of the signal (OUT2) received by the first apparatus.

8. Device according to one of Claims 5 to 7, **characterized in that** the calculation block (10) has a DSP circuit implementing an identification algorithm.

9. Device according to Claim 8, **characterized in that** the identification algorithm is of the LMS, RLS or Kalman type.

10. Communication apparatus (3), **characterized in that** it has a device according to one of Claims 6 to 9.

FIG.1

FIG.2

FIG.3